# FASCICULE DE BREVET EUROPEEN

(11) **EP 1 333 220 B1**
(45) Date de publication et mention de la délivrance du brevet: **25.01.2006**
(21) Numéro de dépôt: 03290263.7
(22) Date de dépôt: 03.02.2003
(51) Int. Cl.: F16L 37/20

(54) **Raccord rapide commandée par un levier à genouillère**
Schnellkupplung mit Kniehebelbetätigung
Quick connector actuated by a toggle lever

(30) Priorité: 04.02.2002 FR 0201261
(43) Date de publication de la demande: 06.08.2003
(73) Titulaire: Etablissements J & Y Charriau, 44270 Saint-Etienne de Mer Morte (FR)
(72) Inventeur: Charriau, Jacques, 85300 Challans (FR); Charriau, Yves, 44310 St.-Philbert de Grand Lieu (FR)
(74) Mandataire: Catherine, Alain

(56) Documents cités:
- EP-A- 1 072 838
- DE-A- 1 931 597
- GB-A- 1 012 865
- US-A- 2 219 162
- US-A- 4 230 345
- US-A- 4 288 116
- US-A- 4 504 085

## Description

La présente invention concerne d'une manière générale, un raccord rapide pour l'installation d'un conduit de transfert sur l'orifice de vidange d'une cuve ou citerne.

Elle concerne un raccord rapide plus particulièrement destiné, par exemple, aux systèmes de collecte du lait dans les fermes pour relier le conduit flexible du camion-citerne à la cuve de stockage du lait ou tank à lait.

Au cours de sa tournée, l'opérateur chargé de la collecte réalise un grand nombre de fois les manoeuvres de raccordement de son conduit sur les différentes cuves dispersées de son circuit de collecte.

Ces opérations de raccordement doivent se réaliser rapidement, avec en plus une attention particulière pour tout ce qui a trait à l'hygiène afin de préserver la qualité du lait collecté.

Aussi, pour l'opérateur, cette opération de raccordement doit pouvoir s'effectuer dans les meilleures conditions possibles, sans fatigue, avec la plus grande sécurité et efficacité.

Différents dispositifs de raccords rapides de conduits sont décrits dans les documents FR-2 808 863, 2 749 919, FR-2 730 550, FR-2 679 314, ou encore DE-19 31 597. Document DE-19 31 597 décrit un raccord rapide comprenant : - la partie fixe du raccord qui est constituée d'une douille avec une gorge une collerette ou bride, et, - la partie mobile dudit raccord qui est constitué d'une douille avec collerette ladite douille sert de support d'une part, à une poignée de portage et, d'autre part, à un crochet en forme d'étrier qui combine des fonctions de positionnement et d'accrochage de ladite partie mobile sur ladite partie fixe, et une fonction de serrage des deux parties, lequel crochet est manoeuvré par le levier de ladite poignée, par l'intermédiaire d'une biellette fonctionnant en genouillère, laquelle biellette est articulée sur le dessus dudit crochet et sur la longueur dudit levier; lequel crochet est articulé sur le dessous de ladite collerette et lequel levier est articulé sur le dessus de ladite douille. La invention propose un raccord rapide constituant une alternative à ceux développés jusqu'à présent. Ce raccord se distingue par une amélioration du confort de l'opérateur qui manipule avec une plus grande aisance ce matériel, et aussi par une amélioration de l'efficacité du raccord, sur le plan de l'étanchéité notamment, laquelle étanchéité peut être maintenue dans le temps par un rattrapage du jeu au niveau des mécanismes.

Le raccord selon l'invention comprend, au niveau de l'orifice de vidange de la cuve de stockage, un embout constituant la partie fixe ou sédentaire du raccord, en forme de douille munie d'une gorge et d'une collerette ou bride et d'un joint d'étanchéité et, au niveau de l'extrémité du conduit de collecte, une partie constituant la partie mobile ou nomade du raccord, en forme de douille avec collerette ou bride également, laquelle douille comporte une bague flottante, derrière ladite collerette. Cette bague sert de support, d'une part, à un levier associé à une poignée de portage et articulé sur le dessus de ladite bague et, d'autre part, à un crochet en forme d'étrier articulé sous ladite bague et qui combine des fonctions de positionnement et d'accrochage de ladite partie nomade sur ladite partie fixe, et une fonction de serrage des deux parties. Le crochet correspondant est manoeuvré par ledit levier au moyen d'une biellette fonctionnant en genouillère, laquelle biellette est articulée sur le dessus dudit crochet et sur la longueur dudit levier, ce dernier passant d'une position sensiblement perpendiculaire à l'axe de la douille, pour le portage et dans laquelle ledit crochet est inactif, à une position sensiblement parallèle à l'axe de la douille, dans laquelle ledit crochet est actif et verrouillé ; le passage d'une position de portage à une position de verrouillage est effectué par l'opérateur en basculant la poignée après mise en place du crochet sur ladite partie fixe, au niveau de la gorge de la douille, et à l'inverse pour passer de la position verrouillée à la position déverrouillée, l'opérateur relève simplement ladite poignée.

Ainsi, l'opérateur déplace le conduit grâce à la poignée du raccord, et ceci avec une seule main ; il conserve une main totalement libre pour d'autres interventions et il peut de ce fait effectuer le raccordement du conduit, sur la cuve à vidanger, sans avoir à poser le conduit et son raccord ce qui est toujours une source d'incidents et de risques pour la qualité du lait.

Toujours selon l'invention, le raccord comporte des moyens pour compenser l'usure et/ou la déformation du mécanisme de serrage ; à cet effet la biellette interposée entre le crochet et la poignée de manoeuvre comporte des moyens qui permettent d'ajuster sa longueur pour régler la course dudit crochet et, par voie de conséquence, qui permettent de maintenir la pression de serrage entre les deux parties du raccord et en particulier entre leur collerette ou bride d'étanchéité.

Selon une autre disposition de l'invention, le crochet est lié à la bague flottante, à sa partie inférieure, au moyen d'une liaison du type cardan ou rotulienne, de façon à réaliser un équilibrage de pression et un contact optimal au niveau des collerettes ou brides d'étanchéité des deux parties du raccord.

Toujours selon l'invention, la position de la liaison du type cardan entre le crochet et la bague flottante est ajustable longitudinalement sur cette dernière pour permettre une autre possibilité de réglage de la course du crochet et de la pression de serrage entre les collerettes ou brides des deux parties du raccord.

Toujours selon l'invention, la partie fixe du raccord comporte, en amont de la gorge d'accueil du crochet, un cylindrage qui permet d'installer un support pour couvercle ou bouchon, lequel support est par exemple constitué d'un collier susceptible de se serrer sur ledit cylindrage. Ce collier est muni, d'un côté, d'une articulation pour ledit couvercle et, de l'autre côté, d'un verrou de fermeture de ce couvercle, lequel couvercle constitue une sorte de coiffe centrée sur la collerette ou bride de cette partie fixe, avec du jeu entre les deux pour permettre le passage de l'eau de rinçage et nettoyer l'extérieur de cette partie fixe.

Toujours selon l'invention, le couvercle est centré par rapport à la collerette de la partie fixe du raccord, au moyen de plots élastiques disposés en triangle par exemple, qui permettent d'établir le jeu entre ledit couvercle et la périphérie de ladite collerette pour le passage de l'eau de rinçage.

La partie fixe du raccord, situé sur la cuve à vidanger, est en forme de douille munie d'une gorge qui permet d'accueillir le crochet, laquelle douille, de faible longueur, est aménagée en fonction de l'orifice de vidange de la cuve, soit avec un pas de vis, soit avec des rainures permettant son sertissage par dudgeonnage, soit aménagée pour faire partie d'un demi-corps de vanne d'arrêt ... etc

L'invention sera encore détaillée à l'aide de la description suivante et des dessins annexés, donnés à titre indicatif, et dans lesquels :
- la figure 1 représente une cuve de stockage du lait ou tank à lait, installé au niveau d'une ferme, et la figure 2 représente partiellement un camion-citerne pour la collecte du lait de la ferme, au moyen d'un conduit de transfert qui est manipulé par un opérateur et qui est muni à son extrémité de la partie nomade du raccord rapide ;
- la figure 3 représente d'une façon plus détaillée, la partie fixe ou sédentaire du raccord, disposée au niveau de l'orifice de vidange de la cuve de stockage du lait ;
- la figure 4 représente schématiquement, la partie mobile ou nomade du raccord, munie de ses moyens pour d'une part, s'accrocher sur la partie fixe et d'autre part se verrouiller d'une façon étanche sur ladite partie fixe ;
- la figure 5 représente, en coupe, schématiquement, le raccord rapide au moment de l'installation de la partie nomade sur la partie fixe du raccord ;
- la figure 6 représente le raccord rapide avec ses deux parties en contact étanche, permettant le passage du lait depuis la cuve de stockage vers le camion-citerne par l'intermédiaire du conduit de transfert ;
- la figure 7 représente une partie fixe constituée d'une douille aménagée pour permettre son sertissage par dudgeonnage avec le tube de sortie disposé à la partie inférieure de la cuve de stockage ;
- la figure 8 représente une partie fixe munie d'un filetage femelle pouvant s'adapter sur une tubulure de sortie mâle type SMS 0 51 ;
- la figure 9 représente un raccord aménagé directement sur un demi-corps de vanne d'obturation pour la cuve de stockage ;
- la figure 10 représente, en coupe, le raccord de la figure 8, installé sur une vanne classique et muni d'un couvercle qui permet le rinçage dudit raccord ;
- la figure 11 représente le couvercle en position ouverte installé au moyen d'un système de fixation par collier sur un cylindrage approprié aménagé sur la partie fixe du raccord situé sur la cuve de stockage.

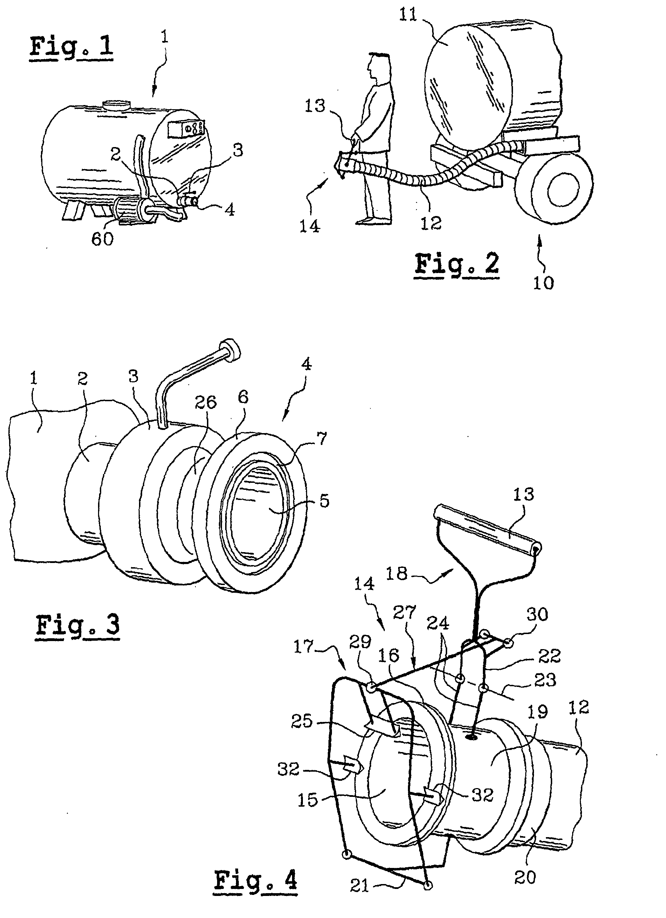

La figure 1 représente, schématiquement, une cuve de stockage de lait, installée au niveau d'une ferme. Cette cuve 1 comporte à sa partie inférieure une tubulure de vidange 2 équipée d'une vanne d'arrêt 3 et de la partie fixe 4 d'un raccord. Cette partie fixe 4 ou embout se présente sous la forme d'une douille 5, comme représenté figure 3, avec une collerette ou bride 6 qui comporte une surface externe de contact et d'étanchéité munie d'un joint 7.

La figure 2 représente une portion d'un véhicule de collecte 10 équipé d'une citerne 11. Cette citerne 11 est reliable, au moyen d'un conduit de transfert 12, à la cuve de stockage 1.

L'extrémité libre du conduit 12 comporte une poignée 13 qui permet à l'opérateur chargé de la collecte, de déplacer le conduit et la partie mobile 14 du raccord, soutenue par ladite poignée.

Comme illustré sur la figure 4, cette partie mobile 14 du raccord comprend une douille 15 munie d'une collerette ou bride 16 identique à la collerette 6 de la partie fixe 4. Cette collerette ou bride 16 comporte une surface externe qui sert de surface de contact et qui est destinée à faire étanchéité avec le joint 7 installé sur la partie fixe 4.

Le raccord rapide selon l'invention comprend donc une partie fixe 4 ou sédentaire solidaire de la cuve de stockage 1 et une partie mobile 14 ou nomade qui est déplacée par l'opérateur et qui vient s'accrocher sur ladite partie fixe 4.

Cet accrochage de la partie mobile 14 sur la partie fixe 4 s'effectue au moyen d'un crochet 17 qui se présente sous la forme d'un étrier. Ce crochet 17 est relié au levier 18 de la poignée 13, et ils sont articulés tous les deux sur une bague 19 qui enveloppe la douille 15 située à l'extrémité du conduit 12. Cette bague 19 est montée flottante c'est-à-dire qu'elle est libre en rotation sur la douille 15 derrière la collerette ou bride 16, entre cette dernière et une butée 20 fixée sur ladite douille, à l'extrémité du conduit 12.

Le crochet 17 est articulé sur la bague 19, à sa partie inférieure, au moyen d'un axe 21 qui est solidaire de ladite bague par des moyens particuliers détaillés plus loin.

Le levier 18 comprend, à sa partie inférieure, une sorte de chape 22 articulée autour d'un axe transversal 23, sur des pattes 24 qui sont solidaires de la bague 19 et qui sont situées à la partie supérieure de ladite bague 19.

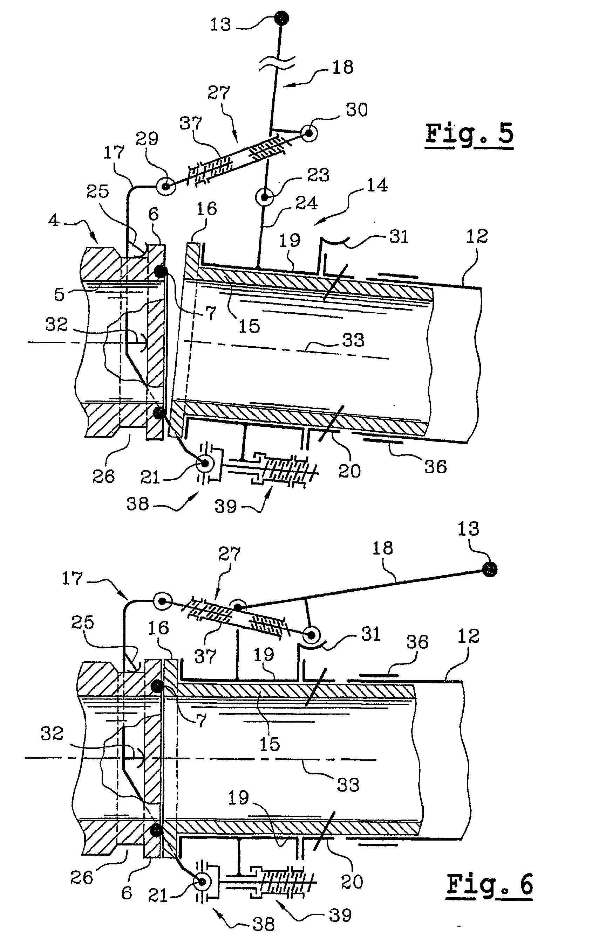

Le crochet 17 comporte, à sa partie supérieure, un mentonnet 25 qui est destiné à se positionner dans une gorge 26 aménagée sur la partie fixe 4 du raccord, derrière la collerette 6. Cette gorge 26 permet à l'opérateur d'accrocher la partie mobile 14 du raccord sur la partie fixe 4, comme représenté figure 5.

Le positionnement du levier 18 et en particulier de son axe 23 au niveau de l'extrémité du conduit de transfert 12, est tel qu'il permet de présenter le raccord mobile 14 face au raccord fixe 4 avec un angle tel que le mentonnet 25 se présente naturellement dans la gorge 26, avec la face radiale de la collerette 16 en appui, à sa partie inférieure, sur la face radiale de la collerette 5. Cette opération s'effectue sans risque d'altérer le joint 7 qui se situe dans une rainure aménagée en creux dans la pièce 4.

Le serrage des deux pièces 4 et 14 formant le raccord, s'effectue au moyen d'un système du type à genouillère. Cette genouillère comprend, interposée entre le levier 18 et le crochet 17, une biellette 27, articulée d'une part, à la partie supérieure du crochet 17 autour d'un axe 29 et d'autre part, sur la longueur du levier 18 autour d'un axe 30.

En position inactive, c'est-à-dire lorsque le levier 18 est sensiblement vertical, le mouvement de ce dernier est limité par la biellette 27 qui entre en contact avec le fond supérieur de la chape 22. En position normale de verrouillage, comme représenté figure 6, le levier 18 repose sur un berceau 31 aménagé sur la partie arrière de la bague 19 par exemple comme représenté figures 5 et 6. On remarque que, dans cette position de verrouillage, la ligne d'axe passant par les articulations 29 et 30 de la biellette 27, est passée sous le point mort c'est-à-dire passée sous l'axe d'articulation 23 du levier 18.

Dans cette position, les deux parties du raccord sont verrouillées l'une par rapport à l'autre et peuvent supporter de fortes charges ; c'est l'un des avantages d'un mécanisme de verrouillage à genouillère.

Le positionnement et le serrage des deux collerettes ou brides 6 et 16 s'effectuent au moyen d'une paire de doigts 32 solidaires chacun des branches latérales 33 du crochet 17. Ces deux doigts 32 se positionnent dans la gorge 26 de la pièce fixe 4 ; ils sont situés dans un plan horizontal centré sur l'axe 33 de la douille 15 de façon à répartir et équilibrer les pressions de serrage.

De plus, ces deux doigts 32 disposés de part et d'autre de la pièce fixe 4 dans la gorge 26, réalisent le centrage de la pièce mobile 14 par rapport à la pièce fixe 4.

Ainsi, le guidage et le positionnement du raccord nomade 14 par rapport à la partie fixe 4, s'effectuent automatiquement par le crochet 17 et en particulier grâce aux deux doigts latéraux 32 qui réalisent le centrage des deux pièces l'une par rapport à l'autre et grâce au mentonnet 25 disposé à la partie supérieure du crochet, qui réalise le calage vertical desdites pièces l'une par rapport à l'autre.

On remarque aussi, figures 5 et 6, que la pièce nomade 14 se présente sous la forme d'une grande douille 15 sur laquelle est disposée la bague 19 qui est libre en rotation sur ladite douille. Cette bague 19 est immobilisée en translation d'un côté par la collerette 16 et de l'autre côté par la butée circulaire 20 qui est solidaire de la douille 15.

L'extrémité du conduit de transfert 12 est enfilé sur l'extrémité de la douille 15 et elle est serrée par un collier approprié 36 ou autre.

La vidange de la cuve de stockage 1 s'effectue par aspiration. Il faut donc bénéficier au niveau du raccord d'une parfaite étanchéité.

Pour compenser les variations du jeu dans le mécanisme à genouillère et régler la pression de serrage entre les deux parties 4 et 14 du raccord, il est prévu d'utiliser une biellette 27 en forme de vérin à vis comme représenté figures 5 et 6. Cette biellette en forme de vérin à vis 37 permet de régler à volonté la distance entre le crochet 17 et le levier 18.

Pour obtenir une pression égale au niveau de chacun des doigts latéraux 32, le crochet 17 est solidaire de la bague 19 au moyen de l'axe 21 et d'une liaison 38 du type à cardan ou rotulienne, comme représenté figures 5 et 6.

Cette liaison 38 peut également, toujours représenté figures 5 et 6, être reliée à la bague 19 par l'intermédiaire d'un dispositif de réglage et d'ajustement de la position de l'axe 21. Ce dispositif 39 du type vis-écrou, permet d'ajuster la position de l'axe 21 et d'améliorer la précision du positionnement des deux pièces 4 et 14 l'une par rapport à l'autre ainsi que leur serrage de façon à compenser les jeux.

La pièce fixe 4 du raccord représenté figures 3 à 6, constitue une sorte d'embout standard mâle.

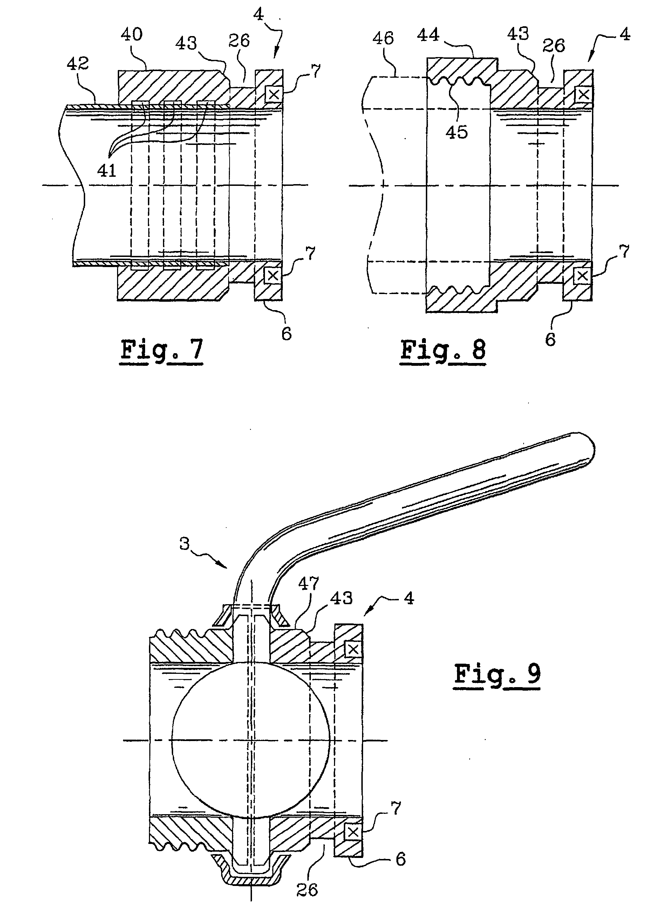

La figure 7 représente un embout adaptable 40 faisant office de pièce fixe 4, aménagé avec des encoches circulaires 41 qui permettent de réaliser une opération de sertissage ou dudgeonnage sur l'extrémité d'un tube 42 fixé sur l'orifice de sortie de la cuve 1.

On retrouve sur cet embout 40 comme sur les embouts suivants, la collerette 6, la gorge 26 et le joint 7. L'entrée de la gorge 26, du côté de la cuve, est aménagée avec un chanfrein 43 qui permet de guider le mentonnet 25 et les doigts 32 lors de l'accrochage de la partie nomade 14 du raccord.

La figure 8 montre un second type d'embout adaptable 44 faisant office de pièce fixe 4, qui est muni d'un filetage femelle 45 pour s'installer sur des embouts existants 46, disposés sur les orifices de sortie des cuves, comme par exemple des embouts mâles type SMS Ø 51 mm.

La figure 9 montre une autre possibilité d'aménagement d'un embout adaptateur 47 faisant office de pièce fixe 4, constituant un demi-corps pour la vanne 3 disposée près de l'orifice de sortie de la cuve de stockage. Cet embout 47 permet de réduire considérablement l'encombrement du raccord ainsi que les quantités résiduelles de lait susceptibles de stagner dans le raccord.

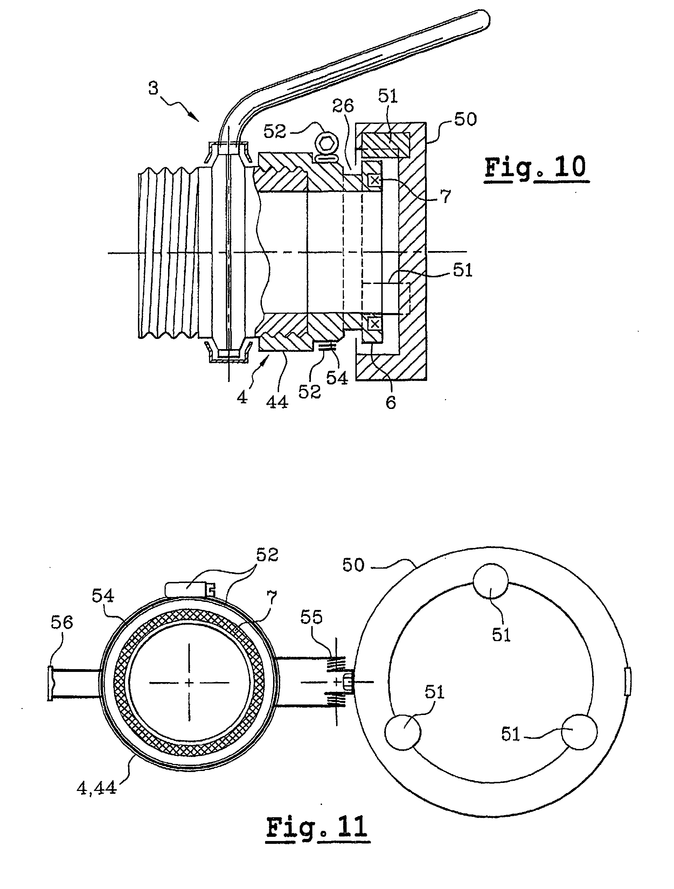

La figure 10 montre l'embout 44 représenté figure 8 installé sur l'embout mâle d'une vanne classique 3. L'embout 44 est associé à un couvercle 50 qui permet un autorinçage complet de cet embout c'est-à-dire de la collerette 6, du joint 7, de la gorge 26 et des alentours.

Ce couvercle 50 vient en fait coiffer à distance la collerette 6. Ce couvercle, comme représenté également figure 11, comporte trois plots 51 disposés en triangle. Ces plots 51 permettent d'ajuster le couvercle sur la collerette 6 tout en ménageant un espace entre ce couvercle et ladite collerette. Le couvercle 50 est solidaire de la pièce fixe 4 au moyen d'un collier 52, par exemple, qui est serré sur un cylindrage 54 du raccord, lequel cylindrage se situe en amont de la gorge 26.

Ce collier 52 comporte, d'un côté, latéralement, une articulation 55 du type à ressort de rappel pour maintenir le couvercle en position inactive ouverte et, de l'autre côté, un verrou 56 ou clip qui permet de retenir le couvercle lorsque ce dernier est en position active pour coiffer la collerette 6.

Ce couvercle 50 est fermé par le producteur ou par l'opérateur de collecte dès qu'il a terminé le prélèvement du lait dans la cuve de stockage 1 et qu'il a débranché le raccord nomade 14. Lorsque le couvercle est en position active sur la collerette 6, le producteur ou l'opérateur de collecte peut mettre en service le système de rinçage de la cuve qui est simplement schématisé figure 1 et qui comprend une motopompe 60.

Ce couvercle permet également de protéger l'orifice de sortie de la cuve de stockage 1 contre toute intrusion intempestive de poussière ou autre.

La raccord rapide selon l'invention est également utilisable dans tous les domaines qui nécessitent de nombreuses et fréquentes opérations de raccordement comme par exemple le domaine du transport et de la livraison de combustibles liquides et autres produits, dans le domaine du matériel de lutte contre les incendies, ...etc.

## Revendications

1. Raccord rapide interposable entre un conduit de transfert (12) d'une citerne de collecte et l'orifice de vidange d'une cuve de stockage (1), comprenant : - au niveau dudit orifice de vidange, la partie fixe (4) du raccord qui est constituée d'une douille (5) avec une gorge (26), une collerette ou bride (6) et un joint d'étanchéité (7), et, - au niveau de l'extrémité dudit conduit de transfert (12), la partie mobile (14) dudit raccord qui est constitué d'une douille (15) avec collerette (16), et d'une bague (19) montée flottante sur ladite douille derrière ladite collerette (16), laquelle bague (19) sert de support d'une part, à une poignée (13) de portage et, d'autre part, à un crochet (17) en forme d'étrier qui combine des fonctions de positionnement et d'accrochage de ladite partie mobile (14) sur ladite partie fixe (4), et une fonction de serrage des deux parties (4) et (14), lequel crochet (17) est manoeuvré par le levier (18) de ladite poignée (13), par l'intermédiaire d'une biellette (27) fonctionnant en genouillère, laquelle biellette (27) est articulée sur le dessus dudit crochet (17) et sur la longueur dudit levier (18), lequel crochet est articulé sur le dessous de ladite bague (19) et lequel levier (18) est articulé sur le dessus de cette même bague (19), ledit levier (18) pouvant passer d'une position sensiblement perpendiculaire à l'axe de la douille (15), pour le portage de la partie mobile (14), dans laquelle le crochet (17) est inactif, à une position sensiblement parallèle à l'axe de la douille (15), dans laquelle ledit crochet (17) est actif et verrouillé.

2. Raccord rapide selon la revendication 1, **caractérisé en ce que** le crochet (17) comporte, à sa partie supérieure, un mentonnet (25) qui coopère avec la gorge (26) aménagée derrière la collerette ou bride (6) de la partie fixe (4), lequel mentonnet (25) sert de support pour la partie mobile (14) et de positionnement de cette dernière par rapport à ladite partie fixe (4).

3. Raccord rapide selon la revendication 2, **caractérisé en ce que** le crochet (17) comporte deux doigts (32) disposés latéralement, au niveau de l'axe longitudinal de la pièce mobile (14), lesquels doigts coopèrent avec la gorge (26) de la pièce fixe (4) pour, d'une part, réaliser le centrage de ladite pièce (14) par rapport à la pièce (4) et, d'autre part, serrer les deux pièces l'une contre l'autre et en particulier sur le joint (7) interposé entre les deux.

4. Raccord rapide selon l'une quelconque des revendications 1 à 3, **caractérisé en ce que** la biellette (27) comporte des moyens qui permettent d'adapter sa longueur afin de régler la course du crochet (17) et, par voie de conséquence, la pression de serrage entre les deux parties du raccord.

5. Raccord rapide selon l'une quelconque des revendications 1 à 4, **caractérisé en ce que** le crochet (17) est lié à la bague flottante (19) au moyen d'une liaison (38) du type cardan ou rotulienne.

6. Raccord rapide selon la revendication 5, **caractérisé en ce que** la liaison (38) du type cardan ou rotulienne, est solidaire de la bague (19) au moyen d'un dispositif de réglage (39) du type vis-écrou, qui permet d'ajuster longitudinalement la position de l'axe d'articulation (21) de l'étrier par rapport à ladite bague.

7. Raccord rapide selon l'une quelconque des revendications 1 à 6, **caractérisé en ce que** la partie fixe (4) comporte, en amont de la gorge (26), un cylindrage (54) qui permet d'installer un support pour un couvercle (50), lequel support est par exemple constitué d'un collier de serrage (52) qui est muni d'un côté d'une articulation (55) du type à ressort liée audit couvercle et, de l'autre côté, d'un crochet ou clip (56) qui permet de fixer ledit couvercle (50), lequel couvercle constitue une sorte de coiffe centrée sur la collerette (6) de ladite partie fixe (4), avec un jeu entre les deux suffisant pour permettre le passage de l'eau de rinçage tout autour dudit raccord, pour nettoyer l'extérieur de ladite partie fixe notamment.

8. Raccord rapide selon la revendication 7, **caractérisé en ce que** le couvercle (50) comporte des plots élastiques (51) disposés en triangle par exemple, qui permettent de le positionner sur la collerette (6) de la partie fixe (4) en ménageant un espace pour le passage de l'eau de rinçage.

9. Raccord rapide selon l'une quelconque des revendications 1 à 8, **caractérisé en ce que** la partie fixe (4) comprend d'une part, une collerette (6), un joint d'étanchéité (7) logé dans une gorge pour coopérer avec la partie mobile dudit raccord et, en amont de ladite collerette (6), une gorge (26) pour loger le crochet (17) et en particulier son mentonnet (25) et ses doigts de serrage (31) et, d'autre part, des aménagements pour se fixer sur les équipements existants.

10. Raccord rapide selon la revendication 9, **caractérisé en ce qu'**il comporte, en amont de la gorge (26), un cylindrage (54) qui permet d'installer un support de couvercle (50), en forme de collier (52).

## Patentansprüche

1. Schnellkupplung, die zwischen einer Übertragungsleitung (12) eines Sammelbehölfers und der Entleerungsöffnung einer Speicherwanne (1) angeordnet werden kann, umfassend:
- im Bereich der Entleerungsöffnung den festen Teil (4) der Kupplung, der von einer Büchse (5) mit einer Rille (26), einem Kragen oder Flansch (6) und einer Dichtung (7) gebildet ist, und
- im Bereich des Endes der Übertragungsleitung (12) den beweglichen Teil (14) der Kupplung, der von einer Büchse (15) mit Kragen (16) und einem Ring (19) gebildet ist, der frei beweglich auf der Büchse hinter dem Kragen (16) befestigt ist, wobei der Ring (19) als Stütze einerseits für einen Tragegriff (13) und andererseits für einen Haken (17) in Bügelform dient, der Funktionen der Positionierung und Befestigung des beweglichen Teils (14) auf dem festen Teil (4) und eine Funktion des Festklemmens der beiden Teile (4) und (14) vereint, wobei der Haken (17) von dem Hebel (18) des Griffes (13) über einen Schwingarm (27), der als Kniehebel dient, betätigt wird, wobei der Schwingarm (27) auf dem Oberteil des Hakens (17) und auf der Länge des Hebels (18) angelenkt ist, wobei der Haken auf dem Unterteil des Ringes (19) und der Hebel (18) auf dem Oberteil eben dieses Ringes (19) angelenkt sind, wobei der Hebel (18) von einer im Wesentlichen auf die Achse der Büchse (15) senkrechten Position zum Tragen des beweglichen Teils (14), in der der Haken (17) inaktiv ist, in eine im Wesentlichen zur Achse der Büchse (15) parallele Position, in der der Haken (17) aktiv und verriegelt ist, übergehen kann.

2. Schnellkupplung nach Anspruch 1, **dadurch gekennzeichnet, dass** der Haken (17) an seinem oberen Teil eine Nase (25) umfasst, die mit der Rille (26) zusammenwirkt, die hinter dem Kragen oder Flansch (6) des festen Teils (4) angeordnet ist, wobei die Nase (25) als Stütze für den beweglichen Teil (14) und zur Positionierung dieses letztgenannten in Bezug auf den festen Teil (4) dient.

3. Schnellkupplung nach Anspruch 2, **dadurch gekennzeichnet, dass** der Haken (17) zwei seitlich im Bereich der Längsachse des beweglichen Teils (14) angeordnete Finger (32) umfasst, wobei diese Finger mit der Rille (26) des festen Teils (4) zusammenwirken, um einerseits die Zentrierung des Teils (14) in Bezug auf den Teil (4) vorzunehmen und andererseits die beiden Teile aneinander und insbesondere an die zwischen ihnen angeordnete Dichtung (7) zu drücken.

4. Schnellkupplung nach einem der Ansprüche 1 bis 3, **dadurch gekennzeichnet, dass** der Schwingarm (27) Mittel umfasst, die es ermöglichen, seine Länge anzupassen, um den Weg des Hakens (17) und folglich den Festklemmdruck zwischen den beiden Teilen der Kupplung einzustellen.

5. Schnellkupplung nach einem der Ansprüche 1 bis 4, **dadurch gekennzeichnet, dass** der Haken (17) mit dem beweglichen Ring (19) mit Hilfe einer Verbindung (38) vom Typ Kardan- oder Kugelgelenkverbindung verbunden ist.

6. Schnellkupplung nach Anspruch 5, **dadurch gekennzeichnet, dass** die Verbindung (38) vom Typ Kardan- oder Kugelgelenkverbindung fest mit dem Ring (19) mit Hilfe einer Einstellvorrichtung (39) vom Typ Schraube-Mutter verbunden ist, die es ermöglicht, die Position der Gelenkachse (21) des Bügels in Bezug zum Ring längs anzupassen.

7. Schnellkupplung nach einem der Ansprüche 1 bis 6, **dadurch gekennzeichnet, dass** der feste Teil (4) stromaufwärts zur Rille (26) einen Zylinder (54) umfasst, der es ermöglicht, eine Stütze für einen Deckel (50) anzubringen, wobei die Stütze beispielsweise von einem Klemmband (52) gebildet ist, das auf einer Seite mit einem Gelenk (55) vom Typ mit Feder, das mit dem Deckel verbunden ist, und auf der anderen Seite einem Haken oder Clip (56) gebildet ist, der es ermöglicht, den Deckel (50) zu befestigen, wobei der Deckel eine Art auf dem Kragen (6) des festen Teils (4) zentrierte Abdeckung darstellt, mit einem ausreichenden Spiel zwischen den beiden, um den Durchgang des Spülwassers um die Kupplung zu ermöglichen, um insbesondere das Äußere des festen Teils zu reinigen.

8. Schnellkupplung nach Anspruch 7, **dadurch gekennzeichnet, dass** der Deckel (50) elastische Stücke (51) umfasst, die beispielsweise im Dreieck angeordnet sind und es ermöglichen, ihn auf dem Kragen (6) des festen Teils (4) zu positionieren, wobei ein Raum für den Durchgang des Spülwassers frei gelassen wird.

9. Schnellkupplung nach einem der Ansprüche 1 bis 8, **dadurch gekennzeichnet, dass** der feste Teil (4) einerseits einen Kragen (6), eine Dichfung (7), die in einer Rille angeordnet ist, um mit dem beweglichen Teil der Kupplung zusammenzuwirken, und stromaufwärts zu dem Kragen (6) eine Rille (26), um den Haken (17) und insbesondere seine Nase (25) und seine Klemmfinger (31) aufzunehmen, und andererseits Vorrichtungen umfasst, um an den bestehenden Ausrüstungen befestigt zu werden.

10. Schnellkupplung nach Anspruch 9, **dadurch gekennzeichnet, dass** sie stromaufwärts zur Rille (26) einen Zylinder (54) umfasst, der es ermöglicht, eine Deckelstütze (50) in Form eines Bandes (52) anzubringen.

## Claims

1. A quick-release fitting interposable between a transfer conduit (12) of a collection tank and the drainage port of a storage vessel (1), comprising : at said drainage port, the fixed section (4) of the fitting which is made of a socket (5) with a groove (26), a collar or a flange (6) and a sealing gasket (7), and, - at the end of said transfer conduit (12), the mobile section (14) of said fitting which is made of a socket (15) with a collar (16), and of a ring (19) floatingly mounted on said socket behind said collar (16), which ring (19) supports on the one hand, a carrying handle (13) and, on the other hand, a hook (17) in the form of a yoke which combines positioning and gripping functions of said mobile section (14) on said fixed section (4), and a clamping function of both sections (4) and (14), which hook (17) is controlled by the lever (18) of said handle (13), by means of a connection rod (27) operating as a knee-joint, which connection rod (27) is hinged on the top portion of said hook (17) and on the length of said lever (18), which hook is hinged on the bottom portion of said ring (19) and which lever (18) is hinged on the top portion of this ring (19), said lever (18) being able to switch from a position substantially perpendicular to the axis of the socket (15), for carrying said mobile section (14), in which the hook (17) is inactive, to a position substantially parallel to the axis of the socket (15), in which said hook (17) is active and locked.

2. A quick-release fitting according to claim 1, **characterised in that** the hook (17) comprises, at the upper section thereof, a tenon (25) which cooperates with the groove (26) provided behind the collar or flange (6) of the fixed section (4), which tenon (25) enables support of the mobile section (14) and positioning of the latter with respect to said fixed section (4).

3. A quick-release fitting according to claim 2, **characterised in that** the hook (17) comprises two fingers (32) arranged laterally, at the longitudinal axis of the mobile section (14), which fingers co-operate with the groove (26) of the fixed section (4) for, on the one hand, centring said section (14) with respect to the section (4) and, on the other hand, clamp both sections against one another and in particular on the gasket (7) interposed therebetween.

4. A quick-release fitting according to any one of claims 1 to 3, **characterised in that** the connection rod (27) comprises means which enable to adapt the length thereof in order to adjust the travel of the hook (17) and, consequently, the clamping load between both sections of the fitting.

5. A quick-release fitting according to any one of claims 1 to 4, **characterised in that** the hook (17) is connected to the float ring (19) by means of a cardan or knee-joint type link (38).

6. A quick-release fitting according to claim 5, **characterised in that** the cardan or knee-joint type link (38) is interconnected with the ring (19) by means of a screw-nut type adjustment device (39), which enables longitudinal adjustment of the position of the hinge axis (21) of the yoke with respect to said ring.

7. A quick-release fitting according to any one of claims 1 to 6, **characterised in that** the fixed section (4) comprises, upstream of the groove (26), a cylindrical section (54) which enables to install a lid support (50), which support is for example made of a clamping collar (52) which is provided on one side with a spring-loaded hinge (55) attached to said lid and, on the other side, with a hook or clip (56) which enables to attach said lid (50), which lid forms a kind of cap centred on the collar (6) of said fixed section (4), with sufficient clearance therebetween to let through the rinsing water around said fitting, to clean the outside of said fixed section particularly.

8. A quick-release fitting according to claim 7, **characterised in that** the lid (50) comprises elastic blocks (51) arranged as a triangle for example, which enable to position said lid on the collar (6) of the fixed section (4) while providing a space for letting through the rinsing water.

9. A quick-release fitting according to any one of claims 1 to 8, **characterised in that** the fixed section (4) comprises on the one hand, a collar (6), a sealing gasket (7) housed in a groove to co-operate with the mobile section of said fitting and, upstream of said collar (6), a groove (26) for housing the hook (17) and in particular the tenon (25) thereof and the clamping fingers (31) thereof and, on the other hand, fixtures for attachment to the existing equipment items.

10. A quick-release fitting according to claim 9, **characterised in that** it comprises, upstream of the groove (26), a cylindrical section (54) which enables to install a lid support (50), in the form of a collar (52).
